# EUROPEAN PATENT APPLICATION

(11) **EP 3 905 701 A1**
(43) Date of publication of application: **03.11.2021**
(21) Application number: 19901935.7
(22) Date of filing: 21.11.2019
(51) Int. Cl.: H04N 21/235, H04N 5/232, H04N 5/77, H04N 5/92, G06F 16/78

(54) **MOVING IMAGE TAGGING DEVICE AND MOVING IMAGE TAGGING METHOD**

(30) Priority: 27.12.2018 JP 2018244485
(71) Applicant: Run.Edge Limited, Tokyo 151-0051 (JP)
(72) Inventor: OGUCHI, Atsushi, Tokyo 151-0051 (JP); SAKAGUCHI, Manabu, Tokyo 151-0051 (JP)
(74) Representative: Hafner & Kohl PartmbB
(86) International application number: PCT/JP2019/045533
(87) International publication number: WO 2020/137274

(57) **Abstract**

Provided is a video tagging device for tagging appended tags and/or comments to a video in time synchronization therewith while seeing a video recording subject of the video instead of watching video footage. The video tagging device 4 comprises: a video data acquisition module 411 to acquire video data 421 recorded by a first terminal device 2 from the first terminal device 2 and to acquire a video recording start time 422 at which recording of the video data 421 is started, and have the video data 421 and the video recording start time 422 stored in a storage device 42; a tag information acquisition module 412 to acquire tag information 423 having tags and/or comments from a second terminal device 3 when the tag information 423 is generated in the second terminal device 3, and to acquire a tag information generation time 424 at which the tag information 423 is generated; and an image processing module 413 to append the tag information 423 to the video data 421 at a timing synchronized with the tag information generation time 424 based on the video recording start time 422 stored in the storage device 42 and a lapse of time from which the video recording of the video data 421 is started.

## Description

### TECHNICAL FIELD

The present invention relates to a video tagging device and method for appending (or tagging) to a video footage tags and/or comments that have been input while seeing a video recording subject of the video instead of watching video footage.

### BACKGROUND ART

Conventionally, in a sports game or practice, for example, videos have been recorded using smartphones, tablets, capture devices, etc., to coach or analyze the players using those videos. On that occasion, the recorded video data are often tagged with a particular scene such as a goal scene. Coaches or others instructing players retrieve desired scenes from tagged footage to provide the players with feedbacks. An analyst retrieves a desired scene from the tagged footage to prepare an analysis report.

Other typical conventional methods for tagging a video include those that load video data into a personal computer to perform tagging scene-by-scene while playing the video. Among such methods, patent document 1, for example, proposes a video tagging that is performed by independently preparing metadata that contain a pair of time data at which an event occurs and information on a type of the event, and appending that metadata to a tag-unadded recorded video.

### PRIOR ART DOCUMENTS

### Patent documents

Patent document 1:JP-A-2008-5010

### SUMMARY OF THE INVENTION

### Problems to be solved by the invention

However, in a conventional video tagging method as mentioned above, tagging work needs to be done only after the recording of a video has been completed, and on top of that, the tagging needs to be done all by oneself and takes time. For this reason, there has been a problem that it takes time before a tagged video becomes available for coaches or analysts to_check Further, coaches or analysts need to prepare a report or to provide players with feedback, in association with a scene in a recorded video, about what they felt or noticed during a match or practice. However, if the tagging is made by others, it takes time to even find such scene. Furthermore, coaches or analysts may potentially forget about what they felt or noticed from the scene they actually saw even by watching a video footage after the tagging had been made.

If coaches or analysts are able to tag a video by themselves with what they felt or noticed from the scene they actually saw on a real-time basis, the above-mentioned problems would be solved. Nevertheless, in the case where the video recording device and the tagging device are different from each other, if video data are uploaded to a server via a communication network, playback of the video from the server (live streaming) lags several tens of seconds behind the actual time (absolute time) due to video image processing such as encoding or communication time period. Further, as is the same case for an un-tagged recorded video of patent document 1, the recorded video data do not contain any data on the absolute time but rather contain data concerning a relative time, associated with the number of frames, as a time that has lapsed from a video recording start time. For this reason, it has never been possible to perform a tagging such that a tag appended time of a tag containing the absolute time of the scene they actually saw is matched up (in synchronization) with the corresponding video recording time.

If one attempts to tag video data on a real time basis, unlike conventional methods, there exist no metadata that are appended with, for example, feature quantity information such as those as described in patent document 1 whenever tagging is to be made. Accordingly, if tagging is to be made in real time, unlike patent document 1, one cannot employ a method of matching a feature quantity sequence information, added to the metadata, with a feature quantity sequence information of un-tagged video to detects which time in the event time tag best matches the time in the untagged video data in order to automatically provide an offset time.

The present invention has been made in view of such circumstances and provides a video tagging device and a video tagging method that are capable of appending (or tagging) input tags and/or comments to a video footage to be properly synchronized therewith while seeing a video recording subject of the video instead of watching video footage.

### Means to solve the problems

The present invention has been made to solve these problems, and provides a video tagging device comprising:
a video data acquisition module to acquire video data recorded by a first terminal device from the first terminal device and to acquire a video recording start time at which recording of the video data is started, and then have the video data and the video recording start time stored in a storage device;
a tag information acquisition module to acquire tag information having tags and/or comments from a second terminal device when the tag information is generated in the second terminal device, and to acquire a tag information generation time at which the tag information is generated; and
an image processing module to append the tag information to the video data at a timing synchronized with the tag information generation time based on the video recording start time stored in the storage device and a lapse of time from which the recording of the video data is started.

As for the video tagging device, the tag information acquisition module may be configured to obtain tag information from a plurality of the second terminal devices.

As for the video tagging device, the video tagging device may be configured not to transmit the video data, acquired from the first terminal device, to the second terminal device during a period for which the second terminal device is displaying a screen for producing the tag information.

The video tagging device may further comprise a video distribution module to distribute a tagged video with the tag information being appended to the video data, wherein the video tagging device is configured not to contain the video recording start time acquired by the video data acquisition module in the tagged video data that are to be distributed from the video distribution module.

The video tagging device may further comprise a video distribution module to distribute tagged video data to a third terminal device upon tapping the tag information on the display screen of the third terminal device during a period for which the tagged video data of which the tag information is appended to the video data are being distributed to the third terminal device, wherein the tagged video data to be distributed to the third terminal device contains a timing synchronized with the tag information generation time corresponding to the tag information.

The present invention provides a video tagging method comprising: a first step of acquiring video data recorded by a first terminal device from the first terminal device and acquiring video recording start time at which recording of the video data is started; a second step of storing the video data and the video recording start time in a storage device; a third step of acquiring tag information having tags and/or comments from a second terminal device when the tag information having tags and/or comments is generated in the second terminal device, and acquiring a tag information generation time at which the tag information is generated; and a fourth step of appending the tag information to the video data in a timing synchronized with the tag information generation time based on the video recording start time stored in the storage device and a lapse of time from which the recording of the video data is started.

As for the video tagging method, the tag information is obtainable in the third step from a plurality of the second terminal devices.

As for the video tagging method, the video data acquired from the first terminal device may be not transmitted to the second terminal device during a period for which the second terminal device is displaying a screen for producing the tag information in the third step.

The video tagging method may further comprise a fifth step of distributing tagged video data with the tag information being appended to the video data, wherein the video recording start time acquired in the first step is not contained in the tagged video data that are to be distributed in the fifth step.

The video tagging method may further comprise a sixth step of distributing tagged video data to a third terminal device upon tapping the tag information on the display screen of the third terminal device during a period for which the tagged video data of which the tag information is appended to the video data are being distributed to the third terminal device, wherein the tagged video data to be distributed to the third terminal device contains a timing synchronized with the tag information generation time corresponding to the tag information.

### Effects of the invention

According to the video tagging device and the video tagging method of the present invention, video data are acquired from the first terminal device, and video recording start time is also acquired to store them in the storage device to correct the deviation in the playback time of the video data with reference to the actual time based on this video recording start time and a lapse of time from which the video recording of the video data is started in order to append the tag information to the video data at a timing appropriately synchronized with the tag information generation time acquired by the tag information acquisition module. The users are thus capable of tagging tag information, containing tags and/or comments having been input in second terminal device, in correct time synchronization therewith to video data of the live footage that is being streamed in real time while seeing an actual scene that is the video recording subject of the video instead of watching video footage.

### BRIEF DESCRIPTION OF THE DRAWINGS

FIG.1 is a block diagram illustrating a preferred embodiment of a schematic framework of a video tagging system comprising a video tagging device of the present invention.
FIG.2 is an explanatory drawing illustrating a preferred embodiment of a method for tagging tags and/or comments to video data according to the video tagging method and the video tagging system having the video tagging device of the present invention.
FIG. 3 is a diagram schematically illustrating a preferred embodiment of a display screen when playing a tagged video that has been tagged according to the video tagging method and the video tagging system having the video tagging device of the present invention.
FIG.4 is a flow chart illustrating a preferred embodiment of a processing flow according to the video tagging method and the video tagging system having the video tagging device of the present invention.

### MODE FOR CARRYING OUT THE INVENTION

Preferred embodiments of the video tagging device and the video tagging method according to the present invention will hereunder be described with reference to the drawings.

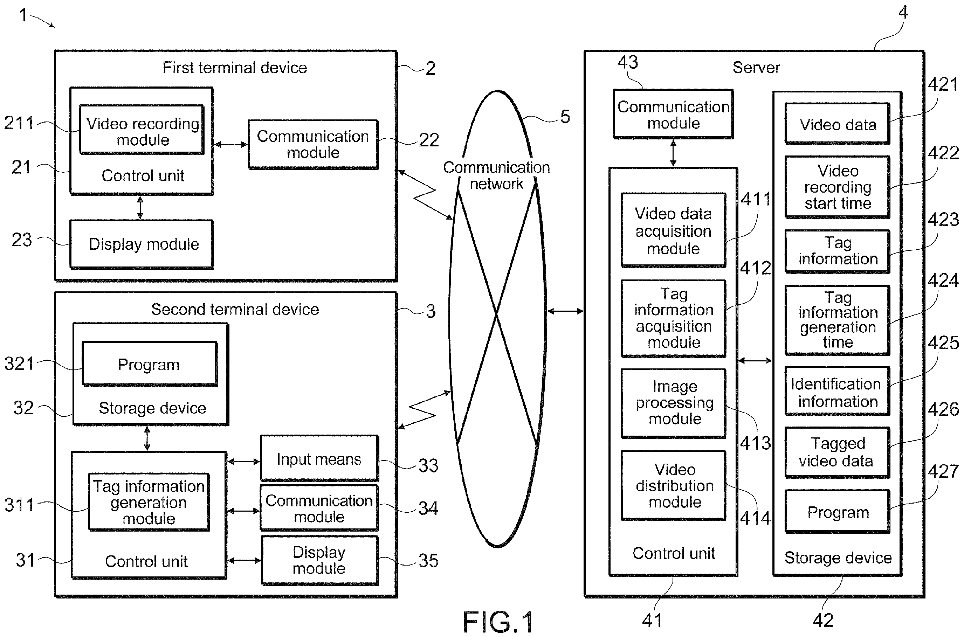

FIG. 1 is a block diagram illustrating an overall configuration of the video tagging system 1 including a video tagging device 4 according to the present embodiment.

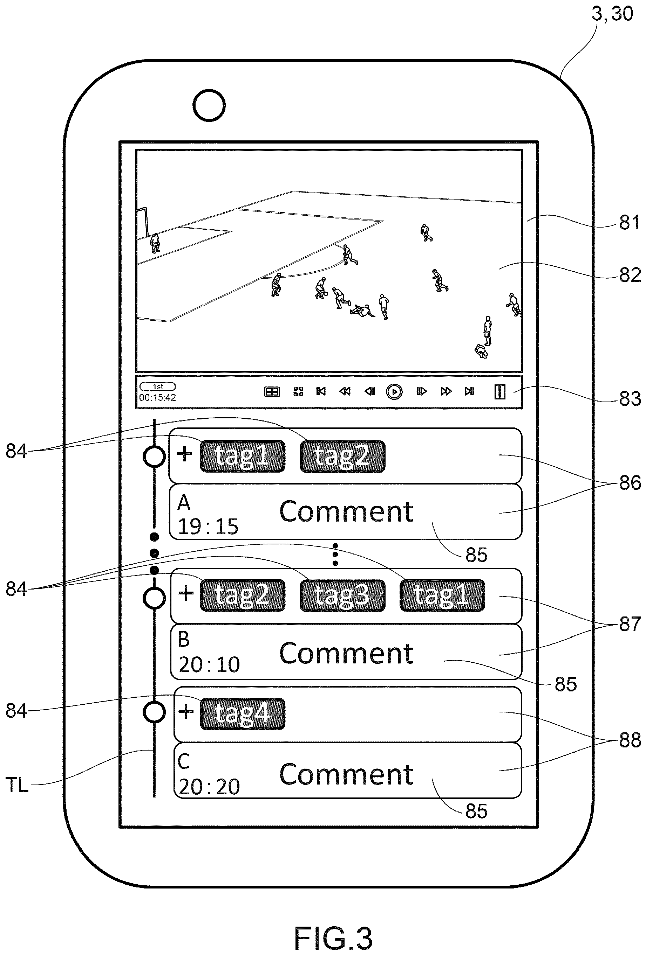

It contains, as components for achieving the video tagging system 1 according to the present embodiment, a first terminal device 2, a second terminal device 3, a server which is a video tagging device 4, and a communication network 5. In the figure, only one second-terminal device 3 is illustrated but there may be contained a plurality of second terminal devices 3. Further, a third terminal device 30 configured in a similar manner as the second terminal device 3 may also be contained therein (see, FIG. 3).

The first terminal device 2 includes, as main components, a control unit 21, a communication module 22, and a display module 23. The control unit 21 contains a video recording module 211 that records live scenes to generate video data 421. The control unit 21 controls the communication module 22 to enable communication via the communication network 5 to the server 4, the second terminal device 3, the third terminal device 30 and/or other devices (not shown). In the present embodiment, the communication module 22 is mainly used for the purpose of sending data of a video recording start time 422 to the server 4 for uploading the video data 421 to the server 4 and/or for storing the video recording start time 422 of the video data 421 in a storage device 42 of the server 4. The control unit 21 controls the display module 23 to display footage of, for example, a recording video on a display screen (not shown) of the display module 23. For example, portable information terminal devices such as a camera-equipped smartphone or tablet with video recording functionality and a capture device may be used for the first terminal device 2.

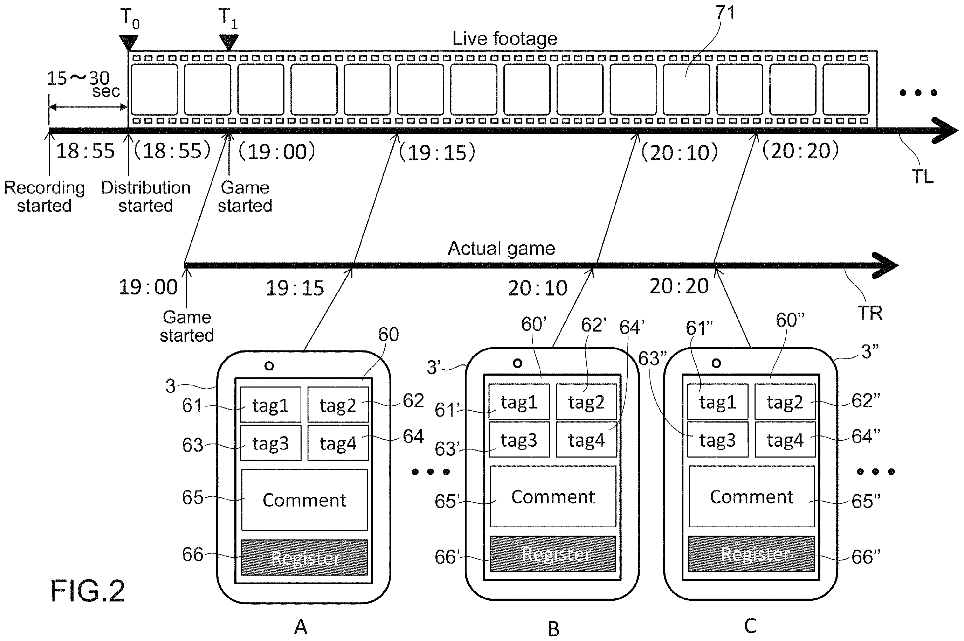

The video data 421 are recorded by the video recording module 211 at a frame rate of, for example, 30 or 60 fps and consist of a plurality of frames 71 that are continuous in time series (see FIG. 2). Each frame 71 is associated with a frame time that indicates a lapse of time from which the video recording is started.

The second terminal device 3 includes, as main elements, a control unit 31, a storage device 32, an input means 33, a communication module 34, and a display module 35. The control unit 31 contains, in a manner to be described later in detail, data on tag information generation time 424 that indicates a time at which, e.g., tags and/or comments are appended, and additionally a tag information generation module 311 for generating tag information 423 containing the tag and/or comment.

The storage device 32 contains a program 321 to be stored by, e.g., installation.

The control unit 31 reads out a program 321 from the storage device 32, and the program 321 allows the control unit 31, serving as a computer, to activate the tag information generation module 311. The input means is configured to communicate a fact that any one or more tag buttons 61, 62, 63, and 64, shown in FIG. 2, are pushed to the control unit 31, or to communicate data that are input by inputting comments to the control unit 31.

The input means 33 includes entry keys displayed, for example, on a touch screen, and accepts, for example, characters that are input with the keys. If an operation of, for example, tapping the touch screen is carried out, then the control unit 31 reads out the program 321 to carry out an input instruction for the control unit 31 to activate a function associated with the operation thereof. For example, if an operator pushes a button displayed on the touch screen, then the fact that the button is pushed with the input means 33 is communicated to the control unit 31, and the control unit 31, in turn, makes the tag information generation module 311 recognize that the button is selected by an instruction of the program 321. The input means 33 may contain input keys of a keyboard provided in, e.g., a mobile computer. Further, the input means 33 may be a means that receives inputs by a voice which is converted into text data to transmit them to the control unit 31.

The control unit 31 controls the communication module 34 to enable communication via the communication network 5 to the server 4, the first terminal device 2, the third terminal device 30 and/or other devices (not shown).

The control unit 31 controls the display module 35 to enable a display screen 60 (See FIG. 2) of the display module 35 to display an application or software screen or the like which is generated by the program 321. The display module 35 and the input means 33 constitute the above-mentioned touch screen, and the input means 33 configured as a transparent electrode is arranged on the display screen of the display module 35. As for the touch screen, it is configured such that if the input means 33 is operated by touch on, e.g., input keys or buttons displayed on the display module 35, then the corresponding operation signal is transmitted from the input means 33 to the control unit 31.

The second terminal device 3 comprises the communication module 34 and is a device capable of executing a program 321 to activate an application or software. For example, a portable information terminal device such as a smartphone or tablet terminal and a mobile computer may be used as such device. For example, in the case of carrying out an analysis, a desktop personal computer or the like may be used as a second terminal device 3 for playing and displaying tagged video data 426.

If structurally possible, in order to provide the first terminal device 2, configured as a video recording terminal, with a function of the second terminal device 3 which is a tagging terminal device, there may be employed a configuration where the first terminal device 2 includes the input means 33 and the tag information generation module 311. However, it is normally preferable that the first terminal device 2 and the second terminal device 3 are devices different from each other.

In the present embodiment, the server 4 configured as a video tagging device of the present invention includes, as main elements, a control unit 41, a storage device 42 and a communication module 43. The control unit 41 includes a video data acquisition module 411, a tag information acquisition module 412, an image processing module 413, and a video distribution module 414. The control unit 41 controls the communication module 43 to enable communication via the communication network 5 to the first terminal device 2, the second terminal device 3, the third terminal device 30 and/or other devices (not shown). The communication module 43 is used, according to the present embodiment, for the purpose of receiving the video data 421 transmitted from the first terminal device 2 to upload the video to the server 4, and/or sending the tagged video data 426 to, for example, the second terminal device 3 and/or the third terminal device 30. The video data acquisition module 411 of the control unit 41 is configured to have the storage device store the video data 421 uploaded from the first terminal device 2 and data on the video recording start time 422 obtained by, e.g., transmission from the first terminal device 2. Particularly, with regard to the video recording start time 422, if the video data acquisition module 411 acquires the video recording start time 422, at which the recording of the video data 421 is initiated, based on time data which are counted by, for example, a timekeeping means (not shown) integrated in the control unit 21 of the first terminal device 2, then the video data acquisition module 411 allows the obtained video recording start time 422 to be stored in the storage device 42. The image processing module 413 of the control unit 41 generates, in a manner to be described later in detail, tagged video data 426 in which tag information 423 is capable of being appended to video data 421 at a timing synchronized with the tag information generation time 424, and store them in the storage device 42 based on the video recording start time 422, read out from the storage device 42, and a lapse of time from which the recording of the video data is started. The video distribution module 414 of the control unit 41 controls the communication module 43 for video streaming the tagged video data 426, generated by the image processing module 413, to a video streaming terminal device such as the second terminal device 3 and the third terminal device 30.

The storage device 42 of the server 4 contains a program 427 to be stored by, e.g., installation. Hardware configuration of the server 4 may be a general configuration such that the control unit 41 configured as a computer includes a central processing unit (CPU) which executes a program 427 stored in the storage device 42 such as a ROM (Read Only Memory) and a hard disk. The program 427 instructs the control unit 41, configured as a computer, to execute the video data acquisition module 411, the tag information acquisition module 412, the image processing module 413 and the video distribution module 414.

The communication network 5 is a communication infrastructure such as the internet.

There will be described a video streaming by the video distribution module 414 of the server 4, particularly about live streaming for streaming the tagged video data 426 as a video image on a real-time basis with reference to FIG. 2.

First, the first terminal device 2 starts the recording of a video at 18:55. The control unit 21 of the first terminal device 2 controls the communication module 22 to upload video data 421 to the server 4 via the communication network 5. The control unit 41 of the server 4 controls the communication module 43 to receive the video data 421, which are then stored in the storage device 42. In this period, a few seconds (normally 15 to 30 seconds) are passed since the video recording is started because of the period during which the video processing is performed for, e.g., encoding the video data 421 and communication period. As this lagged time varies depending on the performance of the first terminal device 2 and the server 4 or the situation or environment of the communication network 5, one cannot predict or estimate any specific lagged time to use it as a time gap for synchronizing the time.

According to the video tagging method and the video tagging system 1 having a video tagging device 4 of the present embodiment, at the outset of uploading video data 421 from the first terminal device 2 to the server 4, time data, counted by, for example, a timekeeping means (not shown) that is integrated into the control unit 21 of the first terminal device 2, are uploaded, along with the video data 421, as a video recording start time 422 at which the recording of the video data 421 is initiated by the first terminal device 2. The video data acquisition module 411 contained in the control unit 41 of the server 4 allows time data of this video recording start time 422 to be stored in the storage device 42. The image processing module 413 sets the start time of the video data 421 stored in the storage device 42 to be a video recording start time 422 stored in the storage device 42. The video distribution module 414 starts streaming at To to which 18:55, a time at which the actual video recording is started, is allocated. The line indicated as TL is a timeline indicating a timecourse of the streaming live footage, and the time noted in each bracket indicates the absolute time that is associated with the video data 421. The times as indicated in these brackets lag, e.g., 15 to 30 seconds behind the times at which the scenes corresponding to the times indicated in the brackets are actually streamed.

There is no particular limitation to the manner by which how the video recording start time 422 is acquired as long as there can be obtained the absolute time at which the recording of the video data 421 is started. For example, the video recording start time 422 may be acquired from time data which are counted by, for example, a timekeeping means (not shown) integrated in the control unit 41 of the server 4. In this case, for example, the video data acquisition module 411 of the control unit 41 separately receives from the first terminal device 2 a fact that the recording has started, and the time data at that time made by a timekeeping means of the server 4 are stored in the storage device 42 as a video recording start time 422 at which the recording of the video data 421 is started by the first terminal device 2. Further, the video recording start time 422 may be acquired from time data which are counted by other timekeeping means (not shown).

The video data 421 recorded by the first terminal device 2 do not contain any data relating to the above-mentioned absolute time (the time indicated in the bracket on the timeline TL). The video data 421 only contain data relating to a relative time which is a time that has lapsed from the video recording start time 422. That is, as explained above, each of the frames 71 in the video data 421 is associated with a frame time that indicates a lapse of time from which the recording is started. Accordingly, this frame time may be added to the video recording start time 422 that is stored in the storage device 42 of the server 4 to estimate actual times (absolute times) at which the respective frames 71 are recorded. As illustrated in an example of FIG. 2, in the case where the streaming start time To is set at 18:55 that is a video recording start time 422, while 5 minutes is, for example, set as a frame time that is a time that has lapsed before T₁ at which the game is started, these 5 minutes may be added to 18:55 to estimate that the game is started at 19:00. In this way, video data 421 having no absolute time may be associated with a time at which the actual video recording took place.

The image processing module 413 of the server 4 may append the recorded times estimated as shown above, i.e., data on the actual recorded times (absolute time), to the video data 421 stored in the storage device 42 to store them in the storage device 42. For example, the data on the appended actual recorded time (absolute time) are associated with the respective frames 71, and may be used as identification information 425 of the frames 71.

It should be noted that the size of the frames 71 shown in FIG. 2 is illustrated merely for explanatory purpose, and the positional relationship between the timescale and position of the frames 71 is different from the actual one.

In Fig. 2, the line indicated as TR is a timeline that indicates actual time, i.e., a timeline indicating a timecourse of the actual game. Here, game starting time is set at 19:00. At 19:15 as indicated next to it in the timeline TR, a user A who owns a second terminal device 3 that is a device different from the first terminal device 2 recording the video data 421, operates the input means 33 on the display screen 60 for an application or software which is displayed on the display module 35 of the second terminal device 3 in order to tag comments and/or tags. In the meantime, the user A performs operation of the input means 33 of the second terminal device 3 not by watching live footage of the video data 421 which is live streaming on a real-time bases but rather by watching an actual game scene that is actually taking place in reality. Accordingly, coaches or analysts are able to take advantage of the second terminal device 3 to tag, by themselves, what they felt or noticed at the scenes they actually saw on a real-time basis.

At 20:10 on the timeline TR, a user B different from the user A is performing operation of the input means 33 of a second terminal device 3' for tagging comments and/or tags. In a similar way, at 20:20, a user C is performing operation of the input means 33 of a second terminal device 3" for tagging comments and/or tags. For example, the user A is a coach, the user B is a defense analyst, and the user C is an offence analyst. A plurality of users A, B and C may simultaneously use the second terminal devices 3, 3', 3" to tag comments and/or tags although their focuses vary depending on their responsibility. Further, as they tag by themselves, they may easily retrieve a desired scene by displaying the tagged video data 426 distributed from the video distribution module 414 via the communication network 5 to the second terminal device 3 to retrieve the scene from them.

In this way, the tag information acquisition module 412 integrated in the control unit 41 of the server 4 is configured to obtain tag information from each of the plurality of second terminal devices 3, 3', 3" via the communication network 5. Further, in order to prevent the users A, B and C from tagging in a wrong timing while watching not an actual game scene but live footage on the second terminal devices 3, 3', 3" they own, the video distribution module 414 in the server 4 is configured such that the video data 421 obtained from the first terminal device 2 are prevented from being distributed via a communication network 5 to the second terminal devices 3, 3', 3" in a period during which the tagging display screens 60, 60', 60" used to generate the tag information shown in FIG. 2 are displayed on the display module 35 of at least the second terminal devices 3, 3' and 3".

Operation of the video tagging system 1 having the video tagging device 4 according to the present embodiment will be specifically described for the case where the second terminal devices 3, 3', 3" owned by the users A, B and C are operated for tagging tags and/or comments.

As for the display screens 60, 60', 60" of the second terminal devices 3, 3', 3", the control unit 31 reads out the program 321 stored in the storage device 32 to activate an application or software to display on the display module 35: tag buttons that can be pushed with the input means 33 when appending tags, and contain a "tag 1" button 61, 61', 61", a "tag 2" button 62, 62', 62", a "tag 3" button 63, 63', 63" and a "tag 4" button 64, 64', 64"; a "Comment" field 65, 65', 65" that allows comments to be input when appending the comment; and a "register button" 66 that can be pushed when determining an appendment of tags and/or comments.

In the second terminal device 3, if the control unit 31 is informed of a fact that the "tag 1" button 61, for example, is pushed with the input means 33, then the control unit 31 makes the tag information generation module 311 recognize that "tag 1" button 61 is selected based on an instruction of the program 321. If the control unit 31 is informed of a fact that the "Register" button 66 is pushed with the input means 33 at the time when the "tag 1" button 61 is selected, then the control unit 31 makes the tag information generation module 311 recognize an instruction for tagging the "tag 1" to the video data 421 based on a command of the program 321. The control unit 31 controls the communication module 34 to transmit the instruction for tagging the "tag 1" to the video data 421 to the server 4 via the communication network 5. In the meantime, the control unit 31 appends to the instruction the tag information generation time 424 at which it is informed that the "Register" button 66 has been pushed, and then transmits it thereto. The tag information generation time 424 may be a time of the absolute time that is associated with time data which are counted by, for example, a timekeeping means (not shown) integrated into the control unit 31 of the second terminal device 3. The tag information acquisition module 412 of the server 4 acquires tag information 423 with the tag information generation time 424 from the second terminal device 3, wherein the tag information 423 contains or is to be transmitted along with the tag information generation time 424.

If two or more pieces of tag information 423 are simultaneously tagged to the video data 421; for example, "tag 1" and "tag 2" are simultaneously tagged to the video data 421 that are transmitted from the first terminal device 2, once the control unit 31 is informed of a fact that the "tag 2" button 62 is pushed with the input means 33 after the tag information generation module 311 has recognized that the "tag 1" button has been selected, the control unit 31 makes the tag information generation module 321 recognize that the "tag 2" button 62 has been selected based on the instruction of the program 321. If the control unit 31 is informed of a fact that the "Register" button 66 is pushed with the input means 33 at the time with both "tag 1" and "tag 2" buttons 61, 62 remaining selected, then the control unit 31 makes the tag information generation module 311 recognize an instruction for tagging the "tag 1" and "tag 2" to the video data 421 based on an instruction by the program 321. The control unit 31 controls the communication module 34 to transmit the instruction for tagging the "tag 1" and "tag 2" to the video data 421 to the server 4 via the communication network 5. In the meantime, the control unit 31 appends to the instruction the tag information generation time 424 at which it is informed that the "register button" is pushed, and then transmits it thereto. The tag information generation time 424 may be a time of the absolute time that is associated with time data which are counted by, for example, a timekeeping means (not shown) integrated in the control unit 31 of the second terminal device 3. The tag information acquisition module 412 of the server 4 acquires tag information 423 with the tag information generation time 424 from the second terminal device 3 such that the tag information 423 contains or is to be transmitted along with the tag information generation time 424.

Alternatively, in order to simplify an input for sending an instruction for tagging the video data 421, the instruction for tagging the video data 421 may be sent, without ever pushing the "Register" button 66, at a time when a tag button such as the "tag 1" button 61 is pushed. That is, if the input means 33 communicate a fact that the "tag 1" button 61, for example, is pushed to the control unit 31, then the control unit 31 makes the tag information generation module 311 to recognize an instruction for tagging "tag 1" to the video data 421 based on an instruction of the program 321. The control unit 31 controls the communication module 34 to transmit the instruction for tagging "tag 1" to the video data 421 to the server 4 via the communication network 5. In the meantime, the control unit 31 appends to the instruction with the tag information generation time 424 at which it is informed that the "tag 1" button 61 is pushed, and transmits it thereto. The tag information generation time 424 may be a time of the absolute time that is associated with time data which are counted by, for example, a timekeeping means (not shown) integrated into the control unit 31 of the second terminal device 3. The tag information acquisition module 412 of the server 4 acquires tag information 423 with the tag information generation time 424 from the second terminal device 3, wherein the tag information 423 contains or is to be transmitted along with the tag information generation time 424.

In the second terminal device 3, if the input means 33 communicate a fact that a text is entered into the "Comment" field 65 to the control unit 31, then the control unit 31 makes the tag information generation module 311 recognize that the text is entered into the "Comment" field 65 based on an instruction of the program 321. If it is communicated to the control unit 31 that the "Register" button 66 is pushed using the input means 33 when a text is entered in the "Comment" field 65, then the control unit 31 makes the tag information generation module 311 recognize an instruction for tagging the comment, entered in the "Comment" field 65, to the video data 421 based on an instruction by the program 321. The control unit 31 controls the communication module 34 to transmit the instruction for tagging the comment, entered in the "Comment" field 65, to video data 421 to the server 4 via the communication network 5. In the meantime, the control unit 31 appends to the instruction the tag information generation time 424 at which it is informed that the "Register" button 66 is pushed, and then transmits it thereto. The tag information generation time 424 may be a time of the absolute time that is associated with time data which are counted by a timekeeping means (not shown) integrated in the control unit 31 of the second terminal device 3. The tag information acquisition module 412 of the server 4 acquires tag information 423 with the tag information generation time 424 from the second terminal device 3, wherein the tag information 423 contains or is to be transmitted along with the tag information generation time 424.

There is no particular limitation to the manner by which the tag information generation time 424 is acquired as long as there can be obtained the absolute time at which tag information 423 is registered. For example, the tag information generation time 424 may be acquired from time data which are counted by, for example, a timekeeping means (not shown) integrated in the control unit 41 of the server 4. In this case, the tag information acquisition module 412 of the control unit 41 stores time data in the storage device 42, wherein the time data are made by the timekeeping means in the server 4 at a time at which the tag information 423 is received from the second terminal device 3, as a tag information generation time 424 at which the tag information 423 is registered by the second terminal device 3. Further, the tag information generation time 424 may be acquired from time data which are counted by other timekeeping means (not shown).

After the tag information acquisition module 412 of the control unit 41 controls the communication module 43 to receive the tag information generation time 424 and the instruction for tagging comments and/or tags such as "tag 1" to the video data 421, the image processing module 413 appends tag information 423, containing comments and/or tags, to the video data 421 stored in the storage device 42; i.e., to a frame 71 in which the received tag information generation time 424 and the identification information 425 as being data for the actual recorded time (absolute time) appended as a recorded time to the frame 71 match up with each other. The video distribution module 414 controls the communication module 43 to allow the tagged video data 426 to be distributed via the communication network 5 to, for example, the second terminal device 3 and/or the third terminal device 30 (See. FIG. 3), where tags such as "tag 1" and/or comments are appended to the tagged video data 426 at a timing when the recorded time and the tag information generation time 424 are suitably in synchronization with each other. In such a way, there may be appended the tag information 423, containing tags and/or comments, to video data 421 stored in the storage device 42 at a timing when the tag information generation time 424 of the tag information 423, containing the tag and/or the comment, is in synchronization with the identification information 425 having the recorded time which is estimated based on the video recording start time 422 of the video stored in the storage device 42. The video distribution module 414, distributing the tagged video data 426 with the tag information 423 being appended to the video data 421, may be configured in such a way that the video recording start time 422, obtained by the video data acquisition module 411 from, for example, the first terminal device 2, is not contained in the tagged video data 426 that are to be distributed from the video distribution module 414.

If a plurality of second terminal devices 3, 3', 3" are provided, "tag 1" to "tag 4" may vary in their contents from one second-terminal device 3, 3', 3" to another. For example, as shown above, in the case where the user A is a coach, the user B is a defense analyst, and the user C is an offence analyst, the respective tags may be set to have matters that are frequently used and needed for each person in charge. Although FIGs. 2 and 3 illustrate examples in which four tags from "tag 1" to "tag 4" are provided, the number of tags is not limited thereto.

The video distribution module 414 of the server 4 may be configured to distribute the tagged video data 426 to the second terminal device 3 and/or the third terminal device 30 to play them on the display screen 81 when tag information 423 is tapped on the display screen 81 of the second terminal device 3 and/or the third terminal device 30 while the tagged video data 426 to which the tag information 423 is appended are being distributed to the second terminal device 3 and/or the third terminal device 30, wherein the tagged video data 426 include a timing in synchronization with the tag information generation time 424 corresponding to the tag information 423. Distribution and playback of the tagged video data 426 will be described hereafter.

FIG. 3 schematically illustrates a preferred embodiment of the display screen 81 when playing the tagged video data 426 that are tagged. A video distributing terminal device for playing the tagged video data 426 that are tagged may, for example, be the second terminal device 3 or third terminal device 30, or other device that can install and execute an application or software. Arranged in the upper region of the display screen 81 is a screen 82 for displaying, for example, game scenes that are regarded as video recording subjects. As for the playback of the video footage, operation button groups 83 displayed on the display screen 81 enable operations such as playback, pause, fast forward, fast rewind, playback of the next scene, playback of the previous scene, and playback speed change.

There are displayed tags 84 and/or comments 85 below the display screen 81 along a vertical line of the timeline TL in a sequential order in respect of the appended time. The displayed region 86 indicates that the user A registered "tag 1" button 61 and "tag 2" button 62 at 19:15, and further that "comment" 65 is registered at the same time. If the displayed region 86 including the tag information 423 is tapped, then a video beginning at 19:15 of the recorded time will be played. For the purpose of improving convenience, the playback may begin at a given time (e.g., 5 seconds) before 19:15 at which the tagging is made, or begin at a time few frames before 19:15 at which the tagging is made. A displayed region 87 indicates that the user B has been registered "tag 1" button 61', "tag 3" button 63' and "tag 2" button 62' at 20:10, and further that "comment" 65' has been registered at the same time. A displayed region 88 indicates that the user C has been registered "tag 4" button 64" at 20:20, and further that "comment" 65" has been registered at the same time. Further, when the displayed region 88 or the displayed region 87 having the tag information 423 is tapped, a video image of the corresponding time will be played in a way similar to the case when tapping the displayed region 86.

There will be described an operation of the case where the second terminal device 3 is used as a display device for playing the tagged video data 426. The third terminal device 30 has a configuration similar to the second terminal device 3, and works in a way similar to the case where the second terminal device 3 is used even when the third terminal device 30 is used as a display device for playing a tagged video that has been tagged. As for the second terminal device 3, if the control unit 31 is informed of a fact that the displayed region 86, for example, is tapped with the input means 33, then the control unit 31 controls the communication module 34, based on an instruction of the program 321, to transmit an instruction for playing the tagged video data 426 associated with the corresponding time on the displayed region 86 to the server 4 via the communication network 5. The control unit 41 of the server 4 controls the communication module 43 to receive an instruction to play the tagged video data 426 that starts from the time at which the tag is appended. The video distribution module 414 acquires data about the instructed playback time from the tagged video data 426 stored in the storage device 42. The control unit 41 of the server 4 controls the communication module 43 to distribute the tagged video data 426 that are to be played from the instructed playback time to the second terminal device 3 via the communication network 5. The control unit 31 of the second terminal device 3 controls the communication module 34 to receive the tagged video data 426 that have been distributed. The control unit 31 controls, based on the instruction of the program 321, the display module 35 to display the tagged video data 426 to be played from the instructed playback time on the display screen 60.

Although not particularly limited thereto, the playback time for playing the tagged video data 426 from a desired tagged time may be restricted to, for example, a given period of time. For example, the playback time may be set for a particular period of time (e.g., 5 seconds), or there may be played video footage for a while until a tag next to the tag already having been played appears. Further, different playback times may be set depending on the contents of the tags (for example "tag 1" to "tag 4") so that the periods of playback times are appropriately set for the scenes corresponding to the contents of the tags. It may be configured that the playback time is set by, for example, the video distribution module 414 of the server 4.

The tags 84 and/or comments 85 may be displayed in a temporal order as shown in FIG. 3, or may be sorted out in accordance with the contents of the tags 84 appended thereto, or may be sorted out and rearranged in accordance with users by which they are appended thereto.

Applications or software for playing the tagged video data 426 and being activated based on the program 321 stored in the storage device 32 of the second terminal device 3 may be applications or software which are identical to the applications or software for tagging the video data 421, or may be other independent applications or software.

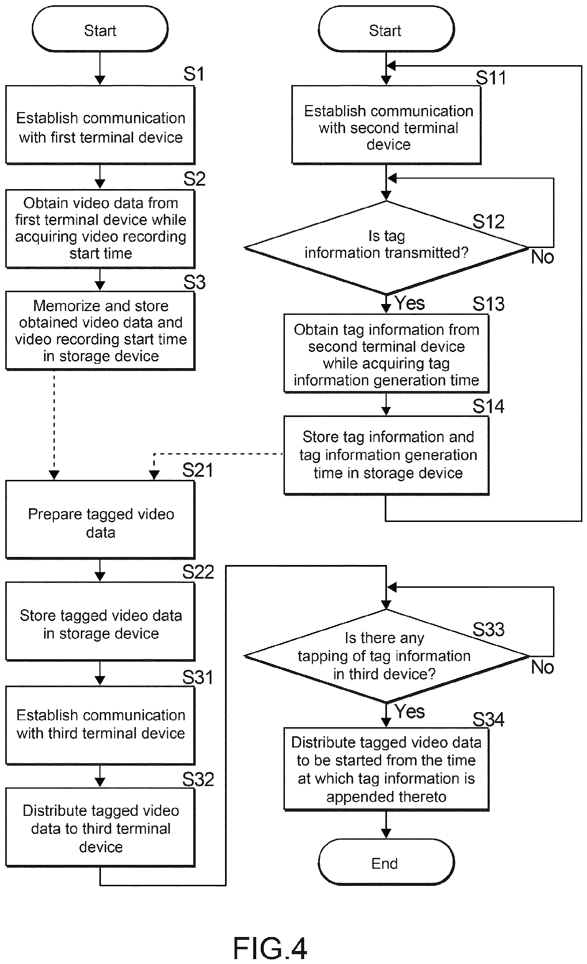

There will be described a scheme of the video tagging method that is executed by the server 4 according to the present embodiment with reference to a flowchart in FIG. 4 showing a preferred embodiment of the video tagging method according to the present invention.

In the first step S1, the control unit 41 of the server 4 controls the communication module 43 to establish a communication with the first terminal device 2, and then in the next step S2, the video data 421, having being made by recording actual game scenes using the first terminal device 2, are obtained from the first terminal device 2 while acquiring time data for the video recording start time 422 of this video data 421. In step S3, the control unit 41 memorizes and stores both the obtained video data 421 and time data of the video recording start time 422 in the storage device 42.

Meanwhile, in step S11, the control unit 41 controls the communication module 43 to establish communications with a plurality of the second terminal devices 3, 3', 3", and then in the next step S12, determines whether or not there are transmitted data on the tag information 423 as mentioned and additionally, if the tag information generation time 424 is to be obtained from the second terminal device 3, 3', 3", data on the tag information generation time 424 from any of the second terminal devices 3, 3', 3". If there are transmitted the tag information 423, and additionally, if required, time data on the tag information generation time 424, then the control unit 41 moves to step S13 to obtain them, and then in the next step S14, records and stores both the obtained tag information 423 and the time data on the tag information generation time 424 in the storage device 42. The series of steps S11 to S14 is repeated until the distribution of the video data 421, transmitted from the first terminal device 2, is over such that a variety of tag information 423, obtained from all of the second terminal devices 3, 3', 3", and the data on the tag information generation time 424 are accumulated in the storage device 42 over time.

After the obtained video data 421 and the time data on the video recording start time 422 are both recorded and stored in the storage device 42 in step S3 as mentioned before, and the tag information 423 and the time data on the tag information generation time 424 are stored in the storage device 42 in step S14, the control unit 41 allows the tagged video data 426 to be distributed by the video distribution module 414 even while the video data are being acquired from the first terminal device 2 via upload.

Specifically, in step S21, the image processing module 413 integrated in the control unit 41 generates tagged video data 426 in which tag information 423 associated with its tag information generation time 424 is appended to a particular frame in the video data 421 at a timing synchronized with the tag information generation time 424, based on time data on the video recording start time 422 that is read out from the storage device 42, and a lapse of time from which the recording of the video data 421 is started, and then stores them in step S22 in the storage device 42. In step S31 thereafter, the video distribution module 414 integrated in the control unit 41 controls the communication module 43 to establish communication with, for example, a third terminal device 30 that has received a request for distributing the tagged video data 426, and then in step S32, the tagged video data 426 read out from the third storage device 42 are distributed to the third terminal device 30 via the communication network 5.

In this way, while the tagged video data 426 are being distributed to the third terminal device 30, the video distribution module 414 determines in step S33 whether or not the tag information 423 on the display screen 81 of the third terminal device 30 is tapped based on the presence or absence of the playback instruction having been transmitted from the third terminal device 30. Here, if a piece of particular tag information 423 is tapped on the display screen 81 of the third terminal device 30, and a playback instruction is transmitted from the third terminal device 30, then in step S34, the video distribution module 414 distributes the tagged video data 426 that starts, for example, from the time at which the tag is appended to the third terminal device 30, based on the tag information generation time 424 corresponding to the tag information 423, to play and display them on the display module 35.

In the above-mentioned series of steps of the server 4, the control unit 41 controls the communication module 43 not to transmit video data 421, obtained from the first terminal device 2, to second terminal device 3 during a period for which the second terminal device 3 is displaying a screen for producing the tag information 423 in step S13. Accordingly, the video data 421, obtained from the first terminal device 2, are prevented from being displayed on the display module 35 of the second terminal device 3. Further, tagged video data 426 to be distributed to the third terminal device 30 in step S32 are prevented from containing time data of the video recording start time 422 which are obtained in step S2.

There will be described examples to which the video tagging system 1, including the video tagging device 4, and the video tagging method according to the present embodiment can be applied. In the examples to be described below, specific functions of each component in the first terminal device 2, the second terminal device 3, the third terminal device 30 and the server 4 are as described in the above-described embodiments.

### Example 1

### <Soccer>

A soccer match is typically made up of first and second halves of 45 minutes each, and the duration of the match lasts very long. Further, there occurs so many events to which tags and/or comments are desired to be appended during the match. For this reason, according to a conventional method of making a tag by oneself while playing a recorded video, it is normally after the day following the match when the tagged video becomes available for a manager, coaches or analysts to be watched.

According to this example, a video shooter uses a first terminal device 2 to shoot, for example, a video of a match while the recorded video data 421 is transmitted to a server 4. When sending the video data 421, a video recording start time 422 at which the recording is started is transmitted from the first terminal device 2 to the server 4 upon, for example, the start of the recording for transmitting the video data. It will be appreciated that the manner of acquiring the video recording start time 422 is not limited to this. Meanwhile, users such as coaches or analysts responsible for inputting comments and/or tags using the terminal devices 3 input comments and/or tags while seeing an actual game scene that is taking place. The input tags and/or comments are dynamically tagged in real time to live footage of the recorded match by the video tagging system 1 having the video tagging device 4 or according to the video tagging method as explained in the embodiment. Accordingly, as the tagged video data 426 are made in real time, a manager, coaches, and analysts are allowed to provide feedback to players during a match or halftime while playing back footage of a scene with the desired tag from the tagged video data 426 that have been tagged. Further, as the tagged video data 426 are provided with tags and/or comments about what the coaches or analysts, for example, felt or noticed at the scenes they actually saw, appropriate feedbacks or analysis can be provided to the players.

For example, in the case of a soccer team, there may be allocated a plurality of coaches who are individually responsible for respective positions such as defenses, offences and a goalkeeper. Further, there may be a coach or trainer responsible for physical strength.
Analysts are often allocated into their respective positions of defense and offence. In this example, since such plurality of coaches, trainers and analysts are each able to append tag information 423 having comments and/or tags to the video data 421, a more specialized coaching or analysis specific to each responsibility can be made.

In this example, examples of the contents for "tag 1" to "tag 4" according to the present embodiment include contents of events such as "Goal", "Shoot", "Pass", "Clear", "Saving", "Tackle" and "Physical", or contents indicating evaluation such as "Good" or "Bad". For example, if a player fires in a shot, and it is determined that the shot is evaluated as being good, then a user such as a coach pushes "Shoot" and "Good" buttons in a row on a display screen 60 of the second terminal device 3 to thereby tag the tag information 423 of "Shoot" and "Good" to the live footage in association with a time at which the user such as coach input the tag after watching an actual scene. On a display screen 81 for playing tagged video data 426 is displayed the tag information 423 of "Shoot" and "Good" in association with the time at which the user such as coach inputs the tag after watching an actual scene, and if the corresponding display area is tapped, then the tagged video data 426 are played, based on the tag information generation time 424 associated with the tag information 423, from the time at which the tag information 423 is input. It will be appreciated that one may input only tags on the content of the event or only tags on the content about evaluation.

### Example 2

### <Baseball>

In a baseball match, tagging to video data has conventionally been made only after completion of one inning, for example, at the earliest while play backing the video data having been recorded for that one inning which is manually delimited by a user. Further, the duration of the match lasts very long as is the case in example 1 for soccer, and there occurs so many events to which tags and/or comments are desired to be appended during the match. For this reason, according to a conventional method of making tags by oneself while playing a recorded video, it takes time until the tagged video becomes available for a manager, coaches or analysts to be watched.

According to this example, a video shooter uses a first terminal device 2 to shoot, for example, a scene of a match while the recorded video data 421 is transmitted to a server 4. When sending video data 421, a video recording start time 422 at which the recording is started is transmitted from the first terminal device 2 to the server 4 upon, for example, the start of the recording for transmitting the video data. It will be appreciated that the manner of acquiring the video recording start time 422 is not limited to this. Meanwhile, users such as coaches or analysts responsible for inputting comments and/or tags using the terminal devices 3 input comments and/or tags while seeing an actual game scene that is taking place. The input tags and/or comments are dynamically tagged in real time to live footage of the recorded match by the video tagging system 1 having the video tagging device 4 or according to the video tagging method as explained in the embodiment. Accordingly, as the tagged video data 426 are made in real time, a manager, coaches, and analysts are allowed to provide feedback to players even during a match or halfway through an inning that is being recorded while playing back footage of a scene with the desired tag from the tagged video data 426 that have been tagged. Further, as the tagged video data 426 are provided with tags and/or comments about what the coaches or analysts, for example, felt or noticed at the scenes they actually saw, appropriate feedbacks or analysis can be provided to the players.

For example, in the case of a baseball team, there may be allocated a plurality of coaches such as hitting coaches, pitching coaches, infield coaches, outfield coaches, base coaches, battery coaches and training coaches. Analysts are often allocated into their respective positions such as hitting, pitching and fielding. In this example, since such plurality of coaches and analysts are each able to append tag information 423 having comments and/or tags to the video data 421, a more specialized coaching or analysis specific to each responsibility can be made.

In this example, examples of the contents for "tag 1" to "tag 4" according to the present embodiment include contents about hitting related events such as "Hit" and "Homerun", contents about pitching related events such as "Fastball", "Curve", "High and Inside" and "Low and Outside", and contents indicating evaluation such as "Strike", "Ball", "Good" and "Bad". For example, if a pitcher throws a pitch whose pitch type is "Fastball" and the course is "High and Inside", and the result is "strike", then a user such as a coach pushes "Fastball", "High and Inside" and "Strike" buttons in a row on a display screen 60 of the second terminal device 3 to thereby tag the tags of "Fastball", "High and Inside" and "Strike" to the live footage in association with a time at which the user such as coach inputs the tag after watching an actual scene. On a display screen 81 for playing tagged video data 426 is displayed the tags of "Fastball", "High and Inside" and "Strike" in association with the time at which the user such as coach inputs the tags after watching an actual scene, and if the corresponding display area is tapped, then the tagged video data 426 are played, based on the tag information generation time 424 associated with the tag information 423, from the time at which tag information 423 is input. It will be appreciated that one may input only tags on the content of the event or only tags on the content about evaluation.

In examples 1 and 2, tags and/or comments may be appended not only to an event of the team to which a user belongs but also to an event of the rival team.

### Example 3

### <Track and field (Hurdling)>

The video tagging system 1, including the video tagging device 4, and the video tagging method according to the present embodiment may be applied to the training or analysis not only of team ball games as exemplified in Examples 1 and 2 but also of individual sports such as track-and-field sports such as hurdling.

According to this example, a video shooter uses a first terminal device 2 to shoot, for example, a scene of an athlete jumping a hurdle while the recorded video data 421 is transmitted to a server 4. When sending the video data 421, a video recording start time 422 at which the recording is started is transmitted from the first terminal device 2 to the server 4 upon, for example, the start of the recording for transmitting the video data. It will be appreciated that the manner of acquiring the video recording start time 422 is not limited to this. Meanwhile, users such as coaches responsible for inputting comments and/or tags using the terminal devices 3 input comments and/or tags while seeing an actual scene of jumping a hurdle. The input tags and/or comments are dynamically tagged in real time to live footage of the recorded scene of jumping the hurdle by the video tagging system 1 having the video tagging device 4 or according to the video tagging method as explained in the embodiment. Accordingly, as the tagged video data 426 are made in real time, coaches are allowed to provide feedback to an athlete right after the end of a run while playing back a footage of a scene with the desired tag from the tagged video data 426 that have been tagged.

In this example, examples of the contents for "tag 1" to "tag 4" according to the present embodiment include contents of events such as "Hurdle", "Interval" and "Start" or contents indicating evaluation such as "Good" or "Bad". For example, the term "interval" as used herein refers to a run between two hurdles. For example, if an athlete accidentally knocks over a hurdle, then a user such as a coach pushes "Hurdle" and "Bad" buttons in a row on a display screen 60 of the second terminal device 3 to thereby tag the tags of "Hurdle" and "Bad" to the live footage in association with a time at which the user such as coach input the tag after watching an actual scene. On a display screen 81 for playing tagged video data 426 is displayed the tags of "Hurdle" and "Bad" in association with the time at which the user such as coach inputs the tags after watching an actual scene, and if the corresponding display area is tapped, then the tagged video data 426 are played from the time at which the tag information 423 is input. Accordingly, coaches are allowed to provide feedback to the athlete about, for example, an improvement of his/her forms right after the end of a run while playing back tagged video data 426 corresponding to the scene of accidentally knocking over a hurdle. It will be appreciated that one may input only tags on the content of the event or only tags on the content about evaluation.

As indicated above, the video tagging device 4 in the present embodiment comprises:
a video data acquisition module 411 to acquire video data 421 recorded by a first terminal device 2 from the first terminal device 2 and to acquire a video recording start time 422 at which recording of the video data 421 is started, and then have the video data 421 and the video recording start time 422 stored in a storage device 42;
a tag information acquisition module 412 to acquire tag information 423 having tags and/or comments from a second terminal device 3 when the tag information 423 is generated in the second terminal device 3, and to acquire a tag information generation time 424 at which the tag information 423 is generated; and
an image processing module 413 to append the tag information 423 to the video data 421 at a timing synchronized with the tag information generation time 424 based on the video recording start time 422 stored in the storage device 42 and a lapse of time from which the video recording of the video data 421 is started.

The video tagging method in the present embodiment comprises: a first step of acquiring video data 421 recorded by a first terminal device 2 from the first terminal device 2 and acquiring a video recording start time 422 at which recording of the video data 421 is started; a second step of storing the video data 421 and the video recording start time 422 in a storage device 42; a third step of acquiring tag information 423 having tags and/or comments from a second terminal device 3 when the tag information 423 having tags and/or comments is generated in the second terminal device 3, and acquiring a tag information generation time 424 at which the tag information 423 is generated; and a fourth step of appending the tag information 423 to the video data 421 in a timing synchronized with the tag information generation time 424 based on the video recording start time 422 stored in the storage device 42 and a lapse of time from which the recording of the video data 421 is started.

In these cases, video data 421 are acquired from the first terminal device 2, and the video recording start time, as being an absolute time, is also acquired to store them in the storage device 42 to correct the deviation in the playback time of the video data 421 with reference to the actual time based on this video recording start time 422 and a lapse of time from which the video recording of the video data 421 is started in order to append the tag information 423 to the video data 421 at a timing appropriately synchronized with the tag information generation time 424 acquired by the tag information acquisition module 412 to thereby make the tagged video data 426. The users are thus capable of tagging tag information 423, containing tags and/or comments having been input in second terminal device 3, in correct time synchronization with the video data of the live footage that is being streamed in real time (the footage is streamed after a delay of a few tens of seconds in effect) while seeing an actual scene that is the video recording subject of the video instead of watching video footage.

As for the tagging device 4 according to the present embodiment, the tag information acquisition module 412 may be configured to obtain tag information 423 from a plurality of the second terminal devices 3, 3', 3".

As for the video tagging method according to the present embodiment, the tag information 423 is obtainable in the third step from a plurality of the second terminal devices 3, 3', 3".

In these cases, a plurality of users are allowed to tag the tag information 423, produced in the respective second terminal devices 3, in correct time synchronization with the video data 421 of the live footage to be streamed in real time while seeing an actual scene to thereby readily share the tag information 423.

As for the video tagging device 4 according to the present embodiment, the video tagging device maybe configured not to transmit the video data 421, acquired from the first terminal device 2, to the second terminal device 3 during a period for which the second terminal device 3 is displaying a screen for producing the tag information 423.

As for the video tagging method according to the present embodiment, the video data 421 acquired from the first terminal device 2 may be not transmitted to the second terminal device 3 during a period for which the second terminal device 3 is displaying a screen for producing the tag information 423 in the third step.

In these cases, at least in the case where a user utilizes the second terminal devices 3 to generate the tag information 423, if it is configured that the video data 421 are not transmitted to that second terminal device 3, the user is prevented from tagging video data 421 in a wrong timing while watching not an actual game scene but live footage on the second terminal devices 3.

The video tagging device 4 according to the present embodiment may further comprise a video distribution module 414 to distribute a tagged video data 426 with the tag information 423 being appended to the video data 421, wherein the video tagging device is configured not to contain the video recording start time 422 acquired by the video data acquisition module 411 in the tagged video data 426 that are to be distributed from the video distribution module 414.

The video tagging method according to the present embodiment may further comprise a fifth step of distributing tagged video data 426 with the tag information 423 being appended to the video data 421, wherein the video recording start time 422 acquired in the first step is not contained in the tagged video data 426 to be distributed in the fifth step.

In these cases, the tagged video data 426 may be directly distributed from the video distribution module 414 without embedding information on the video recording start time 422 -which may be superfluous- into the tagged video data 426.

The video tagging device 4 according to the present embodiment may further comprise a video distribution module 414 to distribute tagged video data 426 to a third terminal device 30 upon tapping the tag information 423 on the display screen 81 of the third terminal device 30 during a period for which the tagged video data 426 of which the tag information 423 is appended to the video data 421 are being distributed to the third terminal device 30, wherein the tagged video data 426 to be distributed to the third terminal device 30 contains a timing synchronized with the tag information generation time 424 corresponding to the tag information 423.

The video tagging method according to the present embodiment may further comprise a sixth step of distributing tagged video data 426 to a third terminal device 30 upon tapping the tag information 423 on the display screen 81 of the third terminal device 30 during a period for which the tagged video data 426 of which the tag information 423 is appended to the video data 421 are being distributed to the third terminal device 30, wherein the tagged video data 426 to be distributed to the third terminal device 30 contains a timing synchronized with the tag information generation time 424 corresponding to the tag information 423.

In these cases, when a tag information 423 is tapped on the display screen 81 during a period for which the tagged video data 426 are being viewed in the third terminal device 30, the tagged video data 426 associated with that tag information 423 are distributed from the video distribution module 414 to the third terminal device 30, and then the footage is played in the third terminal device 30. Accordingly, one may retrieve footage of scene to review the desired scene by a simple tapping operation even during a match or halftime, or even halfway through an inning.

Although the present invention has been described above based on the embodiments, the present invention can be modified to be embodied in various ways. For example, the examples described in the above examples are merely examples, and the present invention can be applied to other various applications.

For example, the video tagging system having the inventive video tagging device and the video tagging method may be utilized for the training or analysis not only of soccer, baseball, and track-and-fields (hurdling) as explained above but also of other ball games such as rugby, American football, basketball and volleyball as well as figure skating, dancing and gymnastics. Further, it can be applied not only to sports but also to dramas, musical performances, lectures, speech contests and other various presentations.

The video tagging system having the inventive video tagging device and the video tagging method may readily be implemented because they can be embodied using a portable information terminal device such as a smartphone or a tablet terminal. Further, the way it is used is simple. For these reasons, not only a professional user but also an amateur user can proactively take advantage of it. For example, parents often video-record their kid's play or performance to utilize it for the purpose of practice. If tagging can be made in real time while recording the video, it reduces the parent's burden of finding the desired scene by repeating, for example, playback and/or rewind after the recording. Further, it also greatly helps children to enhance their ability. It will be appreciated that the video tagging system having the inventive video tagging device and the video tagging method may be utilized for the purpose of matches or real performance, or for the purpose of practices before real performance.

### List of Reference numerals

- 1: video tagging system
- 2: first terminal device
- 3: second terminal device
- 311: tag information generation module
- 30: third terminal device
- 4: video tagging device (server)
- 41: control unit
- 411: video data acquisition module
- 412: tag information acquisition module
- 413: image processing module
- 414: video distribution module
- 42: storage device
- 421: video data
- 422: video recording start time
- 423: tag information
- 424: tag information generation time
- 425: identification information
- 426: tagged video data
- 427: program
- 43: communication module
- 5: communication network
- 71: frame
- 84: tags
- 85: comments

## Claims

1. A video tagging device comprising:
a video data acquisition module to acquire video data recorded by a first terminal device from the first terminal device and to acquire a video recording start time at which recording of the video data is started, and then have the video data and the video recording start time stored in a storage device;
a tag information acquisition module to acquire tag information having tags and/or comments from a second terminal device when the tag information is generated in the second terminal device, and to acquire a tag information generation time at which the tag information is generated; and
an image processing module to append the tag information to the video data at a timing synchronized with the tag information generation time based on the video recording start time stored in the storage device and a lapse of time from which the video recording of the video data is started.

2. The video tagging device according to claim 1, wherein the tag information acquisition module is configured to obtain the tag information from a plurality of the second terminal devices.

3. The video tagging device according to claim 1 or 2, wherein the video tagging device is configured not to transmit the video data, acquired from the first terminal device, to the second terminal device during a period for which the second terminal device is displaying a screen for producing the tag information.

4. The video tagging device according to any one of the preceding claims, further comprising a video distribution module to distribute a tagged video with the tag information being appended to the video data, wherein the video tagging device is configured not to contain the video recording start time acquired by the video data acquisition module in the tagged video data that are to be distributed from the video distribution module.

5. The video tagging device according to any one of claims 1 to 3, further comprising a video distribution module to distribute tagged video data to a third terminal device upon tapping the tag information on the display screen of the third terminal device during a period for which the tagged video data of which the tag information is appended to the video data are being distributed to the third terminal device, wherein the tagged video data to be distributed to the third terminal device contains a timing synchronized with the tag information generation time corresponding to the tag information.

6. A video tagging method comprising:
a first step of acquiring video data recorded by a first terminal device from the first terminal device and acquiring a video recording start time at which recording of the video data is started;
a second step of storing the video data and the video recording start time in a storage device;
a third step of acquiring tag information having tags and/or comments from a second terminal device when the tag information having tags and/or comments is generated in the second terminal device, and acquiring a tag information generation time at which the tag information is generated; and
a fourth step of appending the tag information to the video data in a timing synchronized with the tag information generation time based on the video recording start time stored in the storage device and a lapse of time from which the recording of the video data is started.

7. The video tagging method according to claim 6, wherein the tag information is obtainable in the third step from a plurality of the second terminal devices.

8. The video tagging method according to claim 6 or 7, wherein the video data acquired from the first terminal device are not transmitted to the second terminal device during a period for which the second terminal device is displaying a screen for producing the tag information in the third step.

9. The video tagging method according to any one of claims 6 to 8, further comprising a fifth step of distributing tagged video data with the tag information being appended to the video data, wherein the video recording start time acquired in the first step is not contained in the tagged video data that are to be distributed in the fifth step.

10. The video tagging method according to any one of claims 6 to 8, further comprising a sixth step of distributing tagged video data to a third terminal device upon tapping the tag information on the display screen of the third terminal device during a period for which the tagged video data of which the tag information is appended to the video data are being distributed to the third terminal device, wherein the tagged video data to be distributed to the third terminal device contains a timing synchronized with the tag information generation time corresponding to the tag information.
